(19) Europäisches Patentamt

European Patent Office

Office européen des brevets

(11) **EP 1 763 023 A2**

(12) **EUROPEAN PATENT APPLICATION**

(43) Date of publication:
**14.03.2007 Bulletin 2007/11**

(51) Int Cl.:
***G11B 7/24*** *(2006.01)*

(21) Application number: **06119141.7**

(22) Date of filing: **18.08.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **09.09.2005 JP 2005262709**

(71) Applicant: **KABUSHIKI KAISHA TOSHIBA Tokyo 105-8001 (JP)**
Designated Contracting States:
**DE FR GB**

(72) Inventors:
• **Watabe,Kazuo**
**Toshiba Corporation**
**Intellectual**
**Tokyo 105-8001 (JP)**

• **Ootera,Yasuaki**
**Toshiba Corporation**
**Intellectual**
**Tokyo 105-8001 (JP)**
• **Yoshida,Nobushisa**
**Toshiba Corporation**
**Intellectual**
**Tokyo 105-8001 (JP)**
• **Nakamura, Naomasa**
**Toshiba Corporation**
**Intellectual**
**Tokyo 105-8001 (JP)**

(74) Representative: **Henkel, Feiler & Hänzel**
**Patentanwälte**
**Maximiliansplatz 21**
**80333 München (DE)**

(54) **Information recording medium and optical disc apparatus**

(57)    According to an embodiment of the invention, an information recording medium has a first recording layer (101 (L0)), a second recording layer (102 (L1)) which is provided with respect to the first recording layer through a first space layer with a first thickness, a third recording layer (103 (L2)) which is provided with respect to the second recording layer through a second space layer (108) whose thickness is different from the first space layer and is set to a predetermined magnitude with respect to the thickness of the first space layer, a first substrate (104) which supports the first recording layer, and a second substrate (110) which supports the third recording layer, and it is possible to manufacture with high productivity an information recording medium having three or more recording layers hard to cause interlayer crosstalk.

FIG.2

EP 1 763 023 A2

## Description

One embodiment of the invention relates to a configuration hard to cause interlayer crosstalk in an optical disc (an information recording medium) having two or more recording layers, and an optical disc apparatus (an information recording/reproducing apparatus) for reproducing information from that optical disc.

An optical disc used as an information recording medium is available in a read-only type represented by CD and DVD-ROM, a write once type represented by CD-R and DVD-R, and a rewritable type represented by DVD-RAM and used as external storage for a computer or a recording/reproduces video apparatus (video recording apparatus).

An optical disc having two or more recording layers has been practically used to increase recording capacity. It is known that crosstalk occurs between layers when reproducing information recorded in each recording layer of an optical disc having two or more recording layers. When the number of recording layers is three or more, crosstalk from a farther layer (two layers displaced from a reproducing layer) should be taken into consideration, in addition to crosstalk from an adjacent recording layer.

For example, Jpn. J. Appl. Phys., Vol. 43, No. 7B, pp 4983-4986 (2004) discloses an optical disc, in which the thickness of an adjacent space layer is different in a four-layer ROM disc.

However, the above document indicates that crosstalk is increased when the thickness of an adjacent space layer is the same, and that the thickness of each space layer is made different as a corrective measure, but the required degree of the difference is not indicated. It is of course apparent that when the thickness of an space layer is greatly different, crosstalk becomes small, but the total thickness of space layers exceeds the spherical aberration allowable in an optical disc apparatus.

Further, in actual mass production of an optical disc, it is demanded to take into account variations in the thickness difference among space layers based on a variation in the thickness of a space layer itself (variations among discs).

An object of the invention to enable production with high productivity of an optical disk (an information recording medium) having three or more recording layers hard to cause interlayer crosstalk during reproduction of a signal by an optical disc apparatus (an information reproducing apparatus) which reproduces information from an information recording medium, and to provide an optical disc apparatus which reproduces information from that optical disc. Namely, the invention defines an appropriate thickness difference among adjacent space layers in a multilayer disc, in terms of interlayer crosstalk and disc manufacturability.

According to an aspect of the invention, there is provided an information recording medium comprising: a first recording layer; a second recording layer which is provided with respect to the first recording layer through a first space layer with a first thickness; a third recording layer which is provided with respect to the second recording layer through a second space layer whose thickness is different from the first space layer and is set to a predetermined largeness with respect to the thickness of the first space layer; a first substrate which supports the first recording layer; and a second substrate which supports the third recording layer.

The invention can be more fully understood from the following detailed description when taken in conjunction with the accompanying drawings, in which:

FIG. 1 is an exemplary diagram showing an example of a multilayer optical disc provided with three recording layers on one side in accordance with an embodiment of the invention;
FIG. 2 is an exemplary diagram showing internal reflection occurring in the multilayer optical disc shown in FIG. 1 in accordance with an embodiment of the invention;
FIG. 3 is a graph explaining a relationship between the characteristics of a reproducing system and the thickness of space layers (the amount of defocus) of an optical disc when reproducing information from the multilayer optical disc shown in FIG. 1 in accordance with an embodiment of the invention;
FIG. 4 is a table (characteristics analysis table) explaining a probability to clear a condition of a space layer thickness, which can decrease the degree of influence of internal reflection occurring in the multilayer optical disc shown in FIG. 1, to a reproducing system in accordance with an embodiment of the invention;
FIG. 5 is an exemplary diagram showing an example of an optical disc apparatus (an information reproducing apparatus) used for reproducing information from the multilayer optical disc shown in FIGS. 1 to 4 in accordance with an embodiment of the invention; and
FIG. 6 is a schematic diagram explaining internal reflection occurring in the multilayer optical disc having three or more recording layers shown in FIG. 1 (an interlayer space is made equal, for comparison purposes).

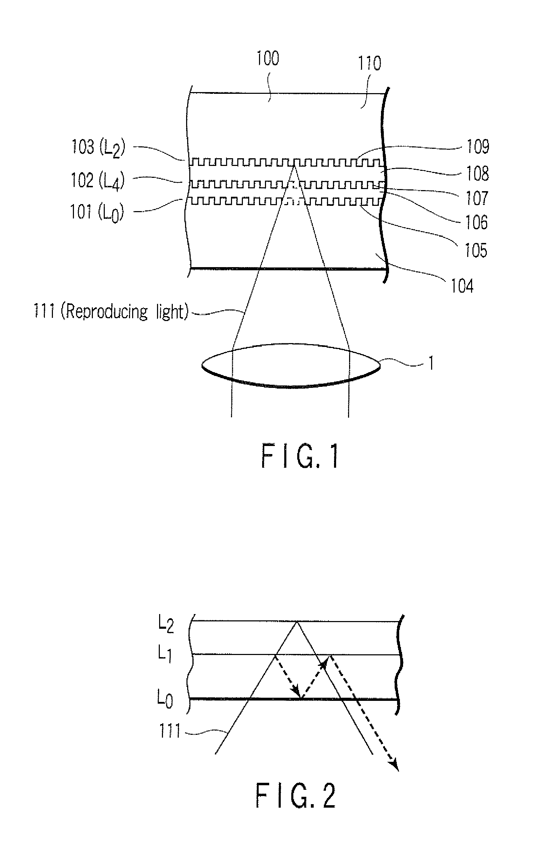

According to an embodiment, FIG. 1 schematically shows a disc having three layers on one side according to an embodiment of the invention.

An optical disc 100 of the invention is characterized by receiving a laser beam from one side (the same side), and accessing to multiple information recording layers (L0 (101), L1 (102), L2 (103)). The optical disc 100 shown in FIG.

1 as an example is a HD DVD read-only disc having three layers on one side. A reproducing light has a wavelength of 405 nm for example, and is radiated to each layer (recording surface) by using an optics (object lens 1) with an NA of 0.65.

Each of the information recording layers 101 to 103 is provided with spirally formed pit of 0.204 μm in the shortest length with a track pitch of 0.40 μm. The disc 100 has the dimensions substantially the same as those of widely used CD and DVD (or HD DVD, BD); 120 mm in the outside diameter, 15 mm in the inside diameter, and 1.2 mm ± 0.03 mm in the total thickness. Of course, an optical disc is not to be limited to these forms. More than four information recording layers may be formed, either a write once type or a recording/reproducing type may be available, an optics such as DVD and BD may be used, a pattern density may be either high or low, and a small size disc with an outside diameter of 80 mm may be used.

The optical disc 100 shown in FIG. 1 has a structure with three sequentially stacked information recording layers 101 (L0), 102 (L1) and 103 (L2). Between the recording layers, a first space layer 106 and a second space layer 108 are formed. Outside the layers L0 (101) and L2 (103), base materials (molding substrates) 104 and 110 are provided.

The optical disc 100 can be easily formed by holding the recording layer 102 (L1) by the first and second space layers 106 and 108 between the substrates 104 and 110, when sticking (stacking) a pattern of the recording layer 103 (L2) and a substrate 110 provided with a predetermined thickness reflection film 109 formed on that pattern, on a pattern of the recording layer 101 (L0) and a substrate 104 provided with a predetermined thickness reflection film 105 formed on that pattern. The sequence of stacking and manufacturing each recording layer is not to be particularly restricted, as long as a manufacturing process is established. For example, it is possible to form the recording layer 101 (L0) and/or recording layer 103 (L2) on both sides or one side of an intermediate substrate (provisional name, given no reference numeral) formed by holding the recording layer 102 (L1) by the first and second space layers 106 and 108, and to stack the molding substrate 104 and/or 110 outside. The molding substrate and space layer, or the space layer and reflection film may be formed by various methods of bonding, vaporizing, self welding using substrate materials, or by sticking.

From each of the information recording layers 101 (L0), 102 (L1) and 103 (L2) of the optical disc 100 shown in FIG. 1, information recorded in an optional layer can be selectively reproduced.

In this time, among the factors to deteriorate reproduction of signals, those peculiar to a multilayer disc are

    1) Shift from an optimum distance from an objective lens to an information recording layer
    2) Crosstalk between layers.

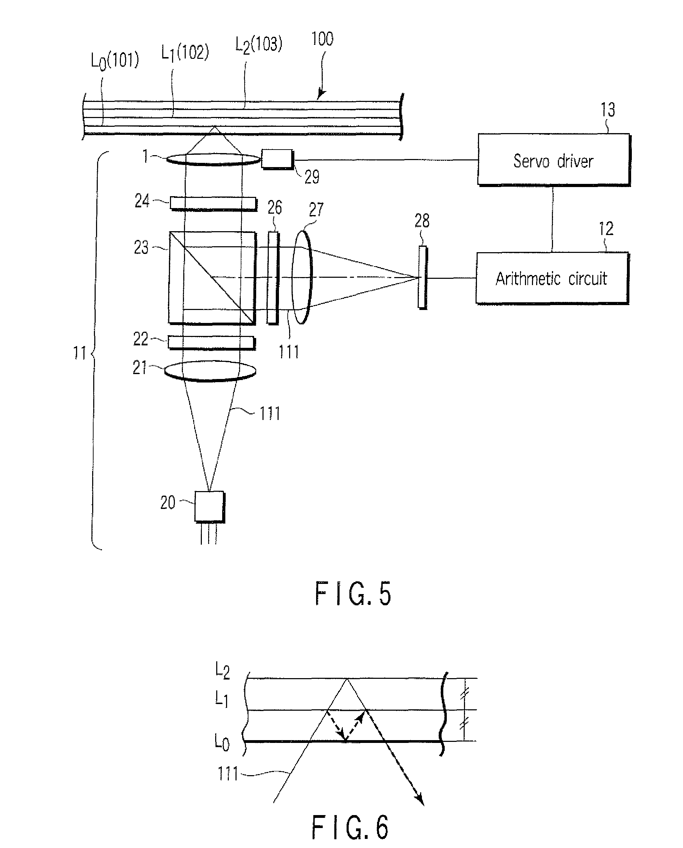

As to 1) shift from an optimum distance from an objective lens to an information recording layer, an explanation will be give later with reference to FIG. 5. In the HD DVD recording/reproducing system 11 of this embodiment, each element is optimized in order to reproduce information from an optional information recording layer through a molded plate (first substrate 104) with the thickness of 0.60 mm. If a distance to a reproducing information recording layer is shifted from an optimum distance (optimum value) to the information recording layer, the quality of a reproducing laser beam is degraded mainly by an influence of spherical aberration (when an influence of the thickness of the substrate 104 and space layer is evaluated by a conception of aberration, it can be handled as a spherical aberration), and a reproducing signal is deteriorated.

It is confirmed that an allowable shift from an optimum distance is ±30 μm of the result of simulation. Therefore, in the multilayer optical disc 100 shown in FIG. 1, it is necessary to set the positions (or the thickness) of all layers within 0.60 mm ± 30 μm. Although not shown in FIG. 5, it is possible to extend the allowable shift from an optimum distance further by ±25 μm by giving a spherical aberration correction function to the reproducing system.

Therefore, in each information recording layer of the multilayer optical disc shown in FIG. 1, a distance from a plane of incidence needs to be within a range of 600 ± 55μm (when a spherical aberration correction function is given), desirably within a range of 600 ± 30 μm (when a spherical aberration correction function is not given).

This indicates that if an optional recording layer is placed within a range of 600 ± 30 μm, a reproducing signal with a desirable quality can be obtained without giving a particular spherical aberration correction function to a reproducing system. Contrarily, a system for reproducing information from a multilayer disc is not necessarily given a spherical aberration function, and it is necessary in an optical disc itself to set two farthest recording layers within a range of 600 ± 30 μm, including an error in manufacturing a disc.

As for 2) crosstalk between layers, it is known first of all that the largeness of an interlayer crosstalk can be controlled when a space layer is thick, while an upper limit value including the space layer thickness is limited by the above 1).

To confirm a lower limit of the space layer thickness, we have experimented the quality of a reproducing signal by actually making an optical disc, and obtained the results that the lower limit is 15 μm when using a next-generation mastering equipment (EBR: Electron Beam Recorder or PTM: Phase Transfer Mastering), and 23 μm when using a current mastering equipment (LBR: Laser Beam Recorder).

In an optical disc having three or more recording layers, it is necessary to take into account the thickness difference of an adjacent space layer, as suggested in the aforementioned non-patent document 1.

For example, FIG. 6 shows an example of a disc having three layers on one side when the thickness of an adjacent space layer is the same. As seen from FIG. 6, when a reproducing laser beam is focused on the third information layer L2 (103), a part of the laser beam reflects on the second information layer L1 (102), reflects again on the first information layer L0 (101) and reflects further on the second information layer L1 (102), thereby generating a reflected laser beam passing along the same optical path as a reproducing light by an original reproducing laser beam (a reflected laser beam from the layer L2) (a part of the reflected laser beam from the recording layer for the purpose of reproducing is focused on the backside of the non-reproducing layer L0 (the first recording layer 101). In this case, the reproducing signal from L0 (from the backside) is superposed as a crosstalk on the main reproducing signal from L2, and the quality of the main signal is extremely degraded.

In contrast to the above, when the thickness of an adjacent space layer is different as shown in FIG. 2, the laser beam (crosstalk component) reflected on the layers L1 and L0 when the reproducing laser beam is focused on the layer L2, passes along an optical path displaced (by a predetermined distance) from the reflected laser beam from L2 (the laser beam of the reproducing signal). Namely, the laser beam reflected on the layers L1 and L0 is guided to a signal detection system in the defocused state. In this case, the crosstalk is superposed on the main reproducing signal from L2 as in the example shown in FIG. 2, but the signal strength, or the degraded degree of the signal, becomes very low.

As described hereinbefore, the interlayer crosstalk caused by the multiple reflections is better when the thickness of adjacent space layer is different, that is, the interlayer crosstalk is decreased when the thickness difference is large.

Therefore, in terms of interlayer crosstalk caused by multiple reflection, the thickness of an adjacent layer is largely different, the crosstalk is improved, but an upper limit of the difference is limited by the reason of 1) mentioned here.

In the background described above, it is preferable to define an appropriate thickness difference from an adjacent space layer in an optical disk having multiple (three or more) recording layers, in terms of interlayer crosstalk and disc manufacturability, for manufacturing an optical disc with a high productivity while preventing an influence of a crosstalk occurred between layers, when reproducing information from the optical disc 100 having three or more recording layers.

To define an appropriate thickness difference from a space layer, first we performed computer simulation to calculate a thickness difference with which how much an interlayer crosstalk is decreased.

The simulation includes estimation of how much the amplitude of the multiple reflection beam of a reproducing signal is decreased with the amount of defocus.

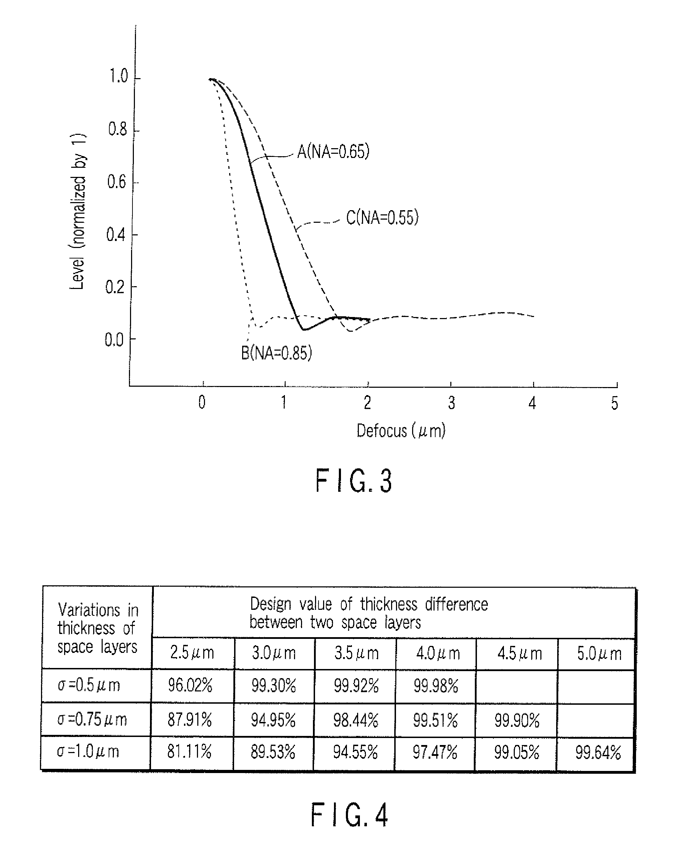

FIG. 3 shows the results. The horizontal axis represents the amount of defocus, and the vertical axis represents the amplitude of a signal normalized (at 1). In the vertical axis, the amplitude of a signal with no defocus, or when focused, is represented by 1.

As seen from FIG. 3, the signal amplitude (the crosstalk amount) is minimum when the NA (numerical aperture) of the object lens 1 (refer to FIG. 1 or FIG. 5) is 0.65 (the curve A) and the amount of defocus is 1.25 $\mu$m, and the amplitude will not be largely increased with a larger amount of defocus. Namely, when the NA is 0.65, a crosstalk can be sufficiently controlled if the amount of defocus, or the thickness difference from an adjacent space layer, is over 1.25 $\mu$m.

On the other hand, when manufacturing an optical disc (in quantity) by setting a thickness difference from an adjacent space layer to 1.25 $\mu$m, it is usually not guaranteed that a crosstalk is minimum in all optical discs manufactured, because of variations in the thickness of space layers in one disc or variations among discs. Thus, it is necessary to take an allowance (to give a larger thickness difference to a space layer) when designing a disc, for satisfying the condition that the thickness difference among space layers is 1.25 $\mu$m or more all over an optical disc.

We have calculated a design value of the thickness difference among space layers by taking 30,000 samples (30,000 experiments), in simulation based on the well-known Monte Carlo method. FIG. 4 shows the results. The simulation shown in FIG. 4 assumes the distribution of thickness variations among space layers normal, and estimates the probability of clearing the condition that the thickness difference among space layers is over 1.25 $\mu$m, by setting a standard deviation to 0.5 $\mu$m, 0.75 $\mu$m, 1.0 $\mu$m, and the thickness difference from an adjacent space layer to 2.5 to 5.0 $\mu$m in steps of 0.5 $\mu$m. Of course, when a variation in the thickness of a space layer itself is small, the probability of clearing the condition is increased even if a disc is designed by setting a thickness difference among space layers to smaller.

According to FIG. 4, assuming as a necessary condition that the probability of clearing the condition is over 99.3%, it is necessary to set a thickness difference among space layers to 3.0 $\mu$m when a standard deviation is $\sigma$ = 0.5 $\mu$m. If $\sigma$ = 0.75 $\mu$m, the thickness difference among space layers is approximately 4.0 $\mu$m, and if $\sigma$ = 1.0 $\mu$m, it is necessary to set a thickness difference among space layers to 5.0 $\mu$m.

According to the above results, when NA is 0.65, a design value DD of the thickness difference among space layers can be obtained by the equation given below, assuming that a standard deviation of variations in the thickness of space layers is S ($\mu$m)

$$DD = 3.5 \times S + 1.25 \ (\mu m) \qquad\qquad (1).$$

FIG. 5 shows an example of an optical disc apparatus (an information recording/reproducing apparatus) capable of reproducing at least information from a multilayer optical disc having three or more recording layers explained with reference to FIG. 1 to FIG. 4.

As shown in FIG. 5, an optical disc apparatus 11 has a semiconductor laser (a light source) 20 for outputting a blue-violet optical beam with a wavelength of 400 to 410 nm, for example, or a laser beam. The wavelength of the laser beam is preferably 405 nm.

An output light (an optical beam) 11 from the semiconductor laser light source 20 is collimated by a collimator lens 21, and guided to a diffraction grating 22 used for obtaining a tracking error signal based on a well-known differential push-pull method.

The optical beam passing through the diffraction grating 22 is transmitted through a polarization beam splitter 23 and a $\lambda/4$ plate 24, and is guided by the object lens 1 to one of the recording layers (recording planes) L0 (101), L1 (102) and L2 (103) of the optical disc 100.

The laser beam 100 condensed on one of the recording layers of the optical disc 100 is reflected on that reproducing object, or a recording layer, sent back to the object lens 1 as a reflected laser beam, and returned to the polarization beam splitter 23 through the $\lambda/4$ plate 24.

The reflected laser beam returned to the polarization beam splitter 23 is reflected on the plane of polarization, and applied to a diffraction optical element 26 for a detector given a predetermined diffraction pattern.

The reflected laser beam passing through the diffraction optical element 26 is focused forming an image on a light-receiving plane of a photodetector 28, as a convergent light with the beam spot size corresponding to a focal distance defined by the convergence given by a condenser lens 27.

The light-receiving part of the photodetector 28 is usually divided into several portions, and each portion outputs a current corresponding to the intensity of light. The current output from each portion of the light-receiving part is converted to a voltage by a not-shown I/V amplifier, and applied to an arithmetic circuit 12 and processed there to be usable as a HF (reproducing) signal, a focus error signal and a track error signal. Although not described in detail, the HF (reproducing) signal is converted to a predetermined signal format, or output to a temporary storage or an external storage through a predetermined interface.

The signal obtained by the arithmetic circuit 12 is supplied also to a servo driver 13, and used to generate a focus error signal to change the position of the object lens 1, so as to make the optical spot formed in a predetermined size at a focal position of the object lens 1, identical to the distance from the object lens 1 to one of the corresponding recording layers L0 (101), L1 (102) and L2 (103) of the optical disc 100. The focus error signal is used to obtain a focus control signal to operate an actuator 29, which changes the position of the object lens 1. The focus control signal generated based on the focus error signal is supplied to the actuator 29. Thus, the object lens 1 held in the actuator 29 is moved optionally in the approaching/separating direction (in the vertical direction in FIG. 5) with respect to the reproducing object, or one of the information recording layers 101 (L0), 102 (L1) and 103 (L2) of the optical disc 100.

The signal obtained by the arithmetic circuit 12 is supplied also to a servo driver 13, and used to generate a tracking error signal to change the position of the object lens 1, so that a spot of laser beam condensed at the focal position of the object lens 1 is guided to substantially the center of a train of record marks recorded on the reproducing object, or a recording layer of the optical disc 100, or a previously formed guide groove, or a track. The tracking error signal is used to obtain a tracking error signal to operate the actuator 29, which changes the position of the object lens 1. The tracking signal generated based on the tracking error signal is supplied to the actuator 29. Therefore, the object lens 1 held in the actuator 29 is moved optionally in the disc radial direction of the information recording layer of the optical disc 100, or in the direction crossing the track or the train of record marks.

Namely, the object lens 1 is controlled by the servo driver 13, so that the optical spot condensed by the object lens 1 can be supplied to a track, or a train of record marks, formed on optional one of the recording layers 101 (L0), 102 (L1) and 103 (L2) of the optical disc 100, at its focal distance, as a minimum optical spot in the recording layer.

Since the NA of a system is controlled from an optical disc drive (an information reproducing apparatus), we will also consider the case where NA = 0.55 and NA = 0.85 (refer to FIG. 3).

As seen from FIG. 3, when NA increases (becomes large), a laser beam tends to go greatly out of focus with small amount of defocus, and the amount of defocus with which a crosstalk signal amplitude becomes minimum is decreased. As a result, it can be said that a crosstalk is sufficiently controlled by the amount of defocus of $0.75\,\mu m$ when NA = 0.85, and by 1.8 $\mu m$ when NA = 0.55. It is known that a wavefront aberration by defocusing is proportional to the square of NA. According to this knowledge and the calculation results of FIG. 3, the thickness difference from an adjacent space layer (= the amount of defocus) required to control NA and crosstalk is given by

$$D = 1.25 \times (0.65/NA)^2 \qquad\qquad (2).$$

From the equations (1) and (2), a general relation among the design value DD of the thickness of space layers, the NA, and the standard deviation S ($\mu$m) of variations in the thickness of space layers, can be derived

$$DD = 3.5 \times S + 1.25 \times (0.65/NA)^2 \qquad (3).$$

By using this relation, the relation between the NA of a signal reproducing system (an optical disc apparatus) and the space layer thickness of an optical disc having three or more recording layers can be defined. Namely, this enables a mass-production of an optical disc capable of controlling an interlayer crosstalk even if a multiple reflection occurs in the space layers.

As explained hereinbefore, according to the invention, it is possible to efficiently manufacture an optical disc, which controls an interlayer crosstalk caused by a multiple reflection, considering the manufacturability of a disc, when designing a multilayer optical disc having three or more recording layers. Therefore, it is possible to manufacture with a high productivity an optical disc (an information recording medium) having three or more recording layers hard to cause an influence of a crosstalk occurred between layers (space layers) when a signal is reproduced by an optical disc apparatus (an information reproducing apparatus) which reproduces information from an optical disc. This improves a yield, and decreases a cost. Namely, in an optical disc of the invention, deterioration of the quality of a reproducing signal caused by a crosstalk is decreased when information is reproduced from an optical disc having three or more recording layers, and good reproducing characteristics can be obtained. Further, in a mass-production, a yield is improved and a cost is decreased by the design based on variations among optical discs.

While certain embodiments of the inventions have been described, these embodiments have been presented by way of example only, and are not intended to limit the scope of the inventions. Indeed, the novel methods and systems described herein may be embodied in a variety of other forms; furthermore, various omissions, substitutions and changes in the form of the methods and systems described herein may be made without departing from the spirit of the inventions. The accompanying claims and their equivalents are intended to cover such forms or modifications as would fall within the scope and spirit of the inventions.

**Claims**

1. An information recording medium **characterized by** comprising:

   a first recording layer ($101(L_0)$);
   a second recording layer which is provided with respect to the first recording layer through a first space layer with a first thickness ($102(L_1)$);
   a third recording layer which is provided with respect to the second recording layer through a second space layer whose thickness is different from the first space layer and is set to a predetermined largeness with respect to the thickness of the first space layer ($103(L_2)$);
   a first substrate which supports the first recording layer (106); and
   a second substrate which supports the third recording layer (108).

2. The recording medium according to claim 1, **characterized in that** the thickness difference between the first and second space layers is over 3 $\mu$m and below 5 $\mu$m.

3. The recording medium according to claim 1, **characterized in that** a design value of the thickness difference between the first and second space layers is $3.5 \times S + 1.25$ $\mu$m when a standard deviation of manufacturing variations in the thickness of the space layers is assumed S ($\mu$m).

4. The recording medium according to claim 1, **characterized in that** a design value of the thickness difference between the first and second space layers is $3.5 \times S + 1.25 (0.65/NA)^2$ ($\mu$m) when a standard deviation of manufacturing variations in the thickness of the space layers is assumed S ($\mu$m), and a numerical aperture of an object lens used as a signal reproducing system is assumed NA.

**5.** An information recording medium **characterized by** comprising:

a first recording layer ($101(L_0)$) which is shaped plate-like or disk-like, and has two planes opposite to each other;
a first space layer with a first thickness (106) which is stacked on one of the planes of the first recording layer;
a second space layer with a second thickness different from the thickness of the first space layer (108), which is stacked on the other plane of the first recording layer;
a second recording layer ($102(L_1)$) which is stacked on the first space layer;
a third recording layer which is stacked on the second space layer ($103(L_2)$);
a first support substrate (104) which is stacked on the second recording layer; and
a second support substrate which is stacked on the third recording layer (110),
wherein the first, second and third recording layers are recorded or reproduced from the first support substrate side, the distances from the first support substrate surface to the first, second and third recording layers are in a range of $600 \pm 55$ μm, and a design value of the thickness difference between the first and second space layers is $3.5 \times S + 1.25$ μm when a standard deviation of manufacturing variations in the thickness of the space layers is assumed S (μm).

**6.** An optical disc apparatus **characterized by** comprising:

an object lens with an numerical aperture NA (1), which condenses a light beam with an wavelength of 400 to 410 nm on any one of recording layers of a recording medium which has at least three recording layers and has space layers whose design value of the thickness difference from an adjacent space layers among those provided between the recording layers is defined by $3.5 \times S + 1.25 (0.65/NA)^2$ (μm) when a standard deviation of manufacturing variations in the thickness of the space layers is assumed S (μm);
a photodetector (28) which detects a light beam reflected on any one of the recording layers of the recording medium captured by the object lens; and
a signal processing circuit (12) which reproduces information recorded on the recording medium by the light beam reflected on any one of the recording layers of the recording medium detected by the photodetector.

**7.** The optical disc apparatus according to claim 6, **characterized in that** NA of the object lens is NA = 0.65.

FIG.1

FIG.2

F I G. 3

| Variations in thickness of space layers | Design value of thickness difference between two space layers | | | | | |
|---|---|---|---|---|---|---|
| | 2.5 $\mu$m | 3.0 $\mu$m | 3.5 $\mu$m | 4.0 $\mu$m | 4.5 $\mu$m | 5.0 $\mu$m |
| $\sigma$ =0.5 $\mu$m | 96.02% | 99.30% | 99.92% | 99.98% | | |
| $\sigma$ =0.75 $\mu$m | 87.91% | 94.95% | 98.44% | 99.51% | 99.90% | |
| $\sigma$ =1.0 $\mu$m | 81.11% | 89.53% | 94.55% | 97.47% | 99.05% | 99.64% |

F I G. 4

FIG. 5

FIG. 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- *Jpn. J. Appl. Phys.,* 2004, vol. 43 (7B), 4983-4986